# EUROPEAN PATENT SPECIFICATION

(11) **EP 1 754 586 B1**
(45) Date of publication and mention of the grant of the patent: **01.07.2015**
(21) Application number: 05743878.0
(22) Date of filing: 27.05.2005
(51) Int. Cl.: B29C 49/64, B29C 49/42, B29C 35/02, B29C 71/00, B29C 49/04

(54) **METHOD OF THERMAL CRYSTALLIZATION TREATMENT FOR CYLINDRICAL MOUTHPART OF A PREFORM**
THERMISCHES KRISTALLISATIONSBEHANDLUNGSVERFAHREN FÜR DIE ZYLINDRISCHE MÜNDUNG EINER VORFORM
METHODE DE TRAITEMENT DE CRYSTALLISATION THERMIQUE POUR PASTILLE BUCCALE CYLINDRIQUE

(30) Priority: 31.05.2004 JP 2004162341
(43) Date of publication of application: 21.02.2007
(73) Proprietor: Yoshino Kogyosho Co., Ltd., Tokyo 136-8531 (JP)
(72) Inventor: IIMURA, Yoshihiro c/o Yoshino Kogyosho Co., Ltd., Matsudo-shi Chiba; 2702297 (JP); KOMURO, Toshiyuki c/o Yoshino Kogyosho Co., Ltd., Isehara-shi Kanagawa; 2591103 (JP); NAGI, Izuru c/o Yoshino Kogyosho Co., Ltd., Isehara-shi Kanagawa; 2591103 (JP); UESUGI, Daisuke c/o Yoshino Kogyosho Co., Ltd., Matsudo-shi Chiba; 2702297 (JP)
(74) Representative: Klingseisen, Franz
(86) International application number: PCT/JP2005/009735
(87) International publication number: WO 2005/115724

(56) References cited:
- EP-A1- 0 304 385
- DE-A1- 10 201 850
- JP-A- 7 032 462
- JP-A- 58 140 225
- JP-A- 59 201 824
- JP-A- 60 000 927
- JP-A- 2000 190 383
- JP-A- 2003 305 766
- JP-A- 2004 330 460
- JP-U- 58 175 022

## Description

This invention relates to a method for thermal crystallization of the neck of a synthetic resin preform.

JP 59 201 824 A discloses a jig of an inverted support type for thermal crystallisation treatment of a neck of a synthetic resin preform wherein the jig is loaded with the synthetic resin preform for use in a biaxial drawing and blow molding process The jig comprises an upright support unit which can be inserted into the preform along the central axis.. The support unit comprises a supporting rod of a diameter smaller than the inner diameter of the preform, which supporting rod has a semispherical end portion wherein only the top of the spherical portion is in direct contact with the semispherical shell-like bottom of the preform. The inverted preform is installed on the jig in such a way that a gap is formed under the top surface of the neck of the preform. Due to the difference between diameter of the supporting rod and the inner diameter of the preform, the preform may oscillate or swing. Therefore, the preform is supported on the inner circumference of the neck by means of a diameter limiting mandrel which is part of the supporting rod.

Patent Document 1 describes a biaxially drawn, blow molded bottle made of a resin of polyethylene terephthalate (hereinafter referred to as a PET) resin to be used with such products as tea and juice that require a filling operation at a high temperature or a thermal treatment process including sterilization. If a PET resin bottle is to be filled with tea, juice, or one of other products that require hot filling (at a temperature in the range of 80 to 90°C) or a thermal treatment process, then use is made of a so-called heat-resistant neck which has a property of heat distortion resistance that has been improved by thermal crystallization process. Patent Document 2 describes a method for thermal crystallization treatment.

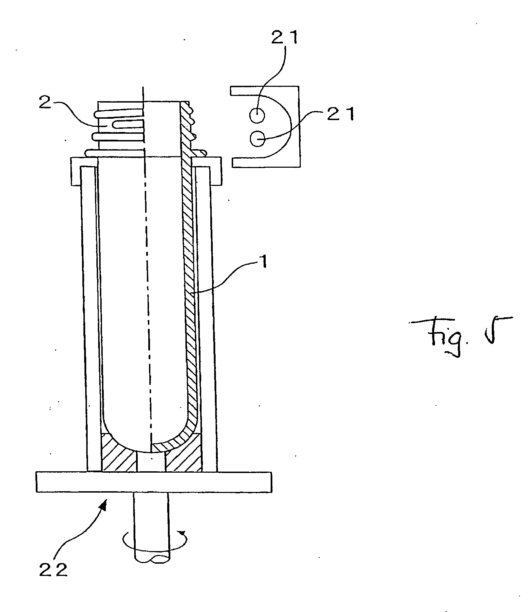

Fig. 5 is an explanatory diagram showing an example of equipment for thermally crystallizing the neck 2 of a PET resin preform 1. The injection-molded preform 1 is inserted into the holder 22, and the neck 2 is heated with an infrared heater 21 to undergo the thermal crystallization process. At that time, the holder 22 is rotated so that heating would be uniform in the circumferential direction.
[Patent Document 1] JP-A-10-58527
[Patent Document 2] JP-B-61-24170

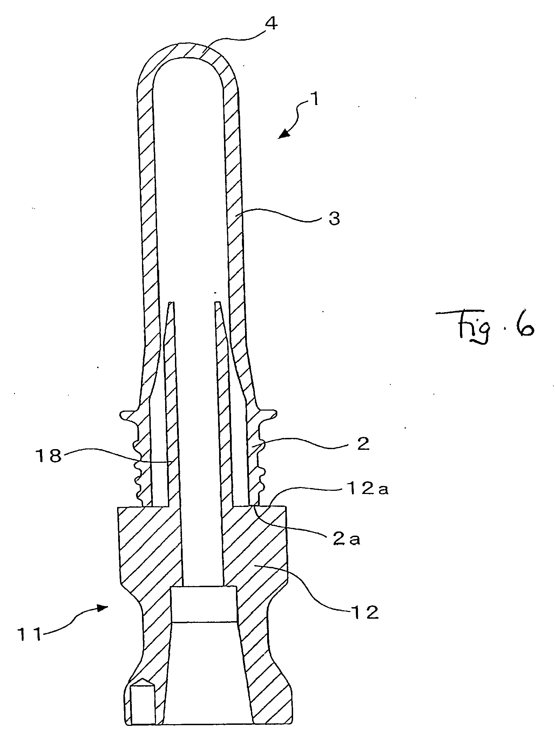

Meanwhile, as shown in Fig. 6, there is a thermal crystallization method, which involves loading a jig of an inverted support type with the preform 1. This method utilizes an air chuck, which makes it easy to load the jig 11 with the preform 1 or to unload the preform 1 therefrom. The machinery and equipment are simple and able to give improved productivity.

The preform 1 is kept uninclined in its inverted posture on the jig 11 of the above-described inverted conveying type by the contact between preform top surface 2a (top surface in its upright posture) and top surface 12a of jig base 12, and by the support of a guide cylinder 18 standing upright from the jig base 12 of the jig 11.

However, if the preform is treated for thermal crystallization by using the jig of the above-described inverted support type, problems arise in that the neck measurements fail to have the values as previously designed, that especially, the outer diameter tends to be larger than the designed value, or that the upper end of the neck 2 has a horn aperture in an extreme case. These problems have to be solved.

A technical problem of this invention is to find out the cause of above-described problems and to create a method for thermal crystallization by means of a jig of the inverted support type that enables a preform neck to be obtained with high dimensional accuracy. The object of this invention is to provide a highly productive thermal crystallization process for the bottle neck and an efficient biaxial drawing and blow molding process for the bottle.

The method according to Claim 1 of this invention to solve the above-described technical problems is a method for thermal crystallization of the neck under the conditions that the jig of the inverted support type is loaded with a synthetic resin preform for use in the biaxial drawing and blow molding process and that the inverted preform is installed on the jig so that a gap is formed under top surface of the neck of said preform .

The inventors studied the problems and found the reasons why outer diameter tends to be larger than the designed value and why the upper end of the neck gets the shape of a horn aperture. As the main reason, they have found out that the neck shrinkage caused by thermal crystallization has been inhibited by the friction between top neck surface and top jig base surface. The load acting on the plane of contact is the weight of the preform itself, which is a relatively small load. However, the inventors discovered that this friction has become large at the top neck surface and inhibited the shrinkage because the preform is heated at a thermal crystallization temperature in the range of 150-220 degrees C, which is considerably higher than the softening temperature (or glass transition temperature) of the PET resin. Thus, the inventors have come to invent the method of Claim 1.

The basic concept of Claim 1 is that the preform neck is thermally crystallized by installing the bottle on the jig under the condition that a gap is maintained under the top neck surface. Because of this gap, the thermal crystallization can be carried out, with no contact of the top neck surface with a part of the jig, such as the top jig base surface or jig parts, and no friction-caused inhibition of thermal shrinkage. Thus, the top neck surface can be prevented from having a wrong shape, such as a horn aperture.

The method of this invention comprises that, in the invention of Claim 1, a gap is formed under the top neck surface of inverted preform by using a jig provided with an upright support unit and by inserting the support unit into the preform along the central axis to the limit of insertion determined previously by the contact of a portion of the support unit with a certain inner wall portion of the preform so that the inverted preform can be fitted to the jig.

The method is a practical method for allowing a gap to be formed under the top neck surface. This method comprises forming a gap under the top neck surface by allowing the upright support unit of the jig to come in direct contact with an inner wall portion, such as the body or the bottom, of the preform. It is also a method for carrying out thermal crystallization while holding the preform in an inverted posture.

The direct contact of the support unit with the inner wall portion of the preform sets the limit to the insertion of the support unit into the preform. Because of this contact, the preform can maintain its inverted posture without allowing the top neck surface to contact with the top jig base surface. Therefore, thermal crystallization can be processed with no frictionally caused inhibition of thermal shrinkage, and the neck has precise diameter and shape as designed..

There are some cases of thermal crystallization process in which a bore diameter control device, such as a control core in a columnar shape or a control ring in a cylindrical shape, is fitted in the neck in direct contact with the inner wall of the neck. This device is used to increase the dimensional precision or to prevent the neck from being distorted into an elliptical shape. In this invention, too, a control ring can be fitted around an area of the support unit located at the height in which the support unit faces opposite the preform neck, and can be used as a bore diameter control.

The method according to Claim 2 of this invention comprises that, in the invention of Claim 1, the preform is made of a PET-related resin.

Because the PET-related resin preform is in the amorphous state, the resin softens to a large extent, and the friction increases greatly between the top neck surface and the top jig base surface, when the neck is thermally crystallized at a high temperature. Therefore, operation of the invention concerning the prevention of inadequate deformation of the neck becomes more effective than ever when the thermal crystallization is carried out under the condition that a gap is formed under the top neck surface of the inverted preform. Thus, the PET-related resin bottles are widely used with tea, juice, etc., that requires filling at a high temperature (in the range of 80 to 90 degrees C), or used in those applications requiring thermal treatment processes. The method of Claim 2 provides a PET-related resin preform and a resultant bottle, which have no inadequate deformation caused by thermal crystallization and have a heat-resistant neck made with dimensional accuracy

PET resin is mainly utilized in Claim 2 of this invention as the PET-related resin. However, as long as the essential qualities of the PET resin are not damaged, copolymer polyesters can also be used, which comprise a major part of ethylene terephthalate units combined with other polyester units. As the components for use in copolymer polyesters there may be mentioned dicarboxylic components, such as isophthalic acid, naphthalene-2,6-dicarboxylate, and adipic acid; and glycolic components, such as propylene glycol, 1,4-butanediol, tetramethylene glycol, neopentyl glycol, cyclohexane dimethanol, and diethylene glycol.
And for example, nylon resins, polyethylene naphthalate resins can be blended with the PET to improve, e.g., heat resistance.

In addition, the PET-related resin bottle of this invention may have an intermediate layer, such as a nylon resin layer, in a combination of layers comprising, e.g., a PET resin - a nylon resin - a PET resin, to give the bottle an improved gas barrier properly.

This invention comprising above-described methods has the following effects: In the method of Claim 1, the preform neck is thermally crystallized by installing the bottle on the jig under the condition that a gap is maintained under the top neck surface of the preform. Because of this gap, the thermal crystallization can be carried out with no friction-caused inhibition of thermal shrinkage. Thus, the top neck surface can be prevented from having a wrong shape, such as a horn aperture.

In the method the support unit standing from the jig base is contacted with a prescribed inner wall of the body or the bottom of the preform. Thermal crystallization is carried out under the condition that the preform is held in the inverted posture while a gap is maintained under the top neck surface of the inverted preform. This method makes it possible for the bottle neck to have the precise bore diameter and shape as previously designed, with no friction-caused inhibition of thermal shrinkage in the top neck portion.

Because the PET-related resin preform according to Claim 2 of this invention is in the amorphous state, the resin softens to a large extent, and the friction increases greatly between the top neck surface and the top jig base surface, when the neck is thermally crystallized at a high temperature. Therefore, operation of the invention concerning the prevention of inadequate deformation of the neck becomes more effective than ever when thermal crystallization is carried out under the condition that a gap is formed under the top neck surface of the inverted preform. The method of Claim 2 provides a PET-related resin preform and a resultant bottle, which do not have any inadequate deformation caused by thermal crystallization but have a heat-resistant neck made with dimensional accuracy.

### Brief Description of the Drawings

Fig. 1 is a vertical sectional front view of the jig in the first embodiment used in the method of this invention, with a preform installed thereon.
Fig. 2 is a vertical sectional front view of the jig in the second embodiment, with a preform installed thereon.
Fig. 3 is a vertical sectional front view of the jig in another embodiment, with a preform installed thereon.
Fig.. 4 is a vertical sectional front view of the jig in a further embodiment, with a preform installed thereon.
Fig. 5 is an explanatory diagram showing an example of the device for thermal crystallization in the upright position.
Fig. 6 is a vertical sectional front view of a conventional jig of the inverted type for use in thermal crystallization, with a preform installed thereon.

### Explanation of Codes

1. Preform
2. Neck
3a. Top neck surface
3. Body
4. Bottom
5. Tapered portion of the preform
11. Jig
12. Jig base
12a. Top jig base surface
13. Support unit
13a. Tapered portion of the support unit
14. Support base
15. Support rod
**16.** Semi-spherical end portion
16a. Double nuts
17. Bore diameter control device
17a. Tapered portion of the bore control device
18. Guide cylinder
21. Infrared heater
22. Holder
G. Gap

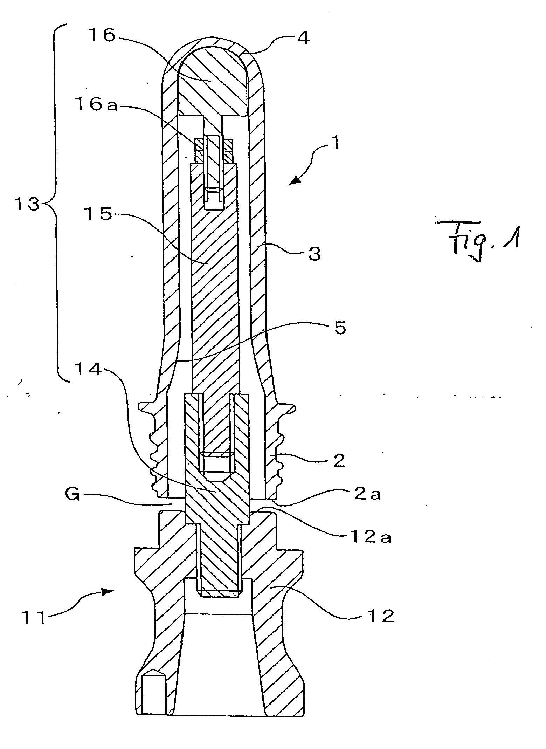

This invention is further described with respect to preferred embodiments, now referring to the drawings Fig. 1 is a vertical sectional front view of jig 11 in the first embodiment of this invention, with preform 1 installed thereon. The jig 11 is used for thermal crystallization of the preform neck made of a PET resin.

The jig 11 comprises a cylindrical jig base 12, which has a top surface and is fitted to a conveying system (not shown), and also a support unit 13 standing along the central axis from the central portion of the top surface of the jig base 12. In the first embodiment, this support unit 13 comprises a support base 14 screw-engaged with the jig base 12, a support rod 15 screw-engaged with the support base 14, and a spherical end portion 16 screw-engaged with the support rod 15. The entire height of the support unit 13 is adjustable by means of double nuts 16a.

As obvious from Fig. 1, the semi-spherical end portion 16 comes in contact with the inner wall of the bottom 4 of the preform 1 under the condition that the preform 1 has been fitted from above to the jig 11. At that time, a gap G is formed between the top surface 2a of the neck 2 and the top surface 12a of the jig base 12. With the semi-spherical end portion 16 in direct contact with the bottom 4 of the semi-spherical shell shape, the preform 1 can be held stably in the inverted posture.

Thermal crystallization is carried out under this condition by using an infrared heater. The top surface 2a of the neck 2 is not in contact with the top surface 12a of the jig base 12, and the thermal crystallization makes the neck 2 shrink in a free state. Thus, the neck 2 has the precise diameter in conformity to the given design standard.

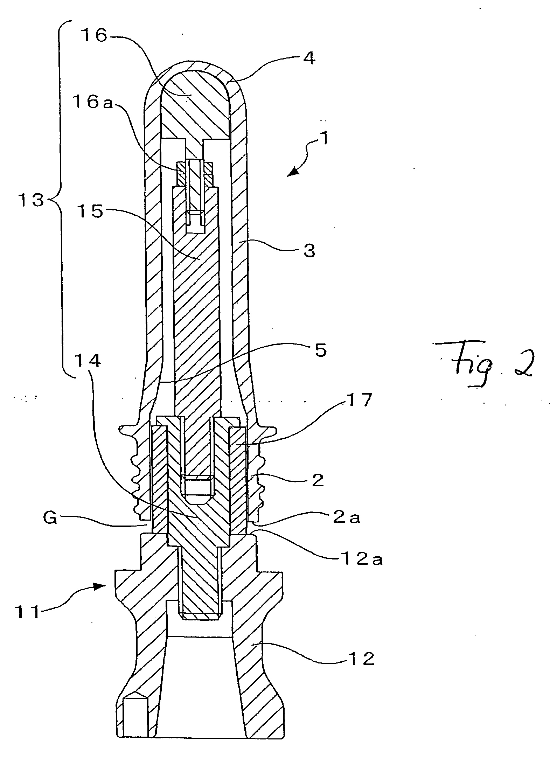

Fig. 2 shows the second embodiment of the jig used in thermal crystallization. This jig 11 comprises a cylindrical bore diameter control device 17, which is fitted around the support base 14 of the jig 11 of Fig. 1. Thus, the jig 11 of Fig. 1 can optionally be equipped with such a bore diameter control device 17.

The bore diameter control device 17 is utilized by fitting it into the neck 2 in direct contact with the inner wall of the neck 2, or by fitting it in the neck 2 so as to have some clearance to minimize the residual distortion caused by thermal crystallization. In either way, this bore diameter control device 17 ensures that the preform 1 is held stably in its inverted shape.

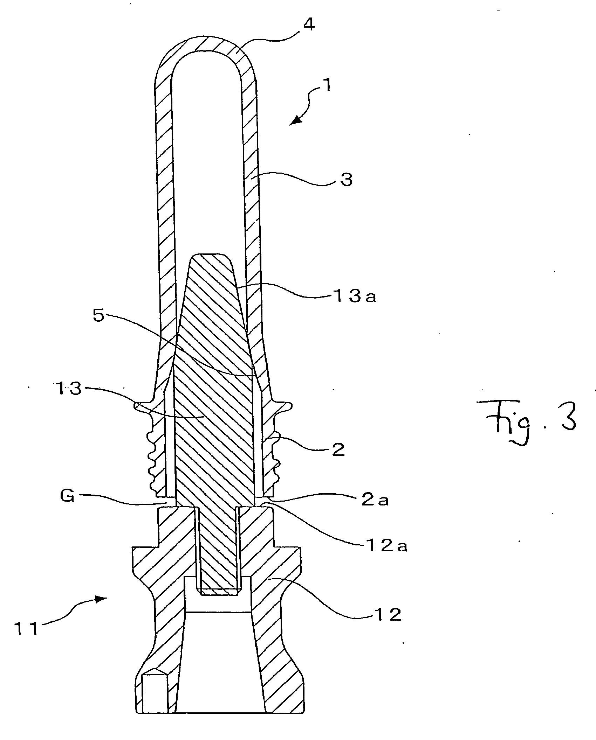

Fig. 3 shows another embodiment of the jig used in thermal crystallization. A tapered portion 5 in the upper area of the body 3 of the preform 1 is utilized A tapered support portion 13a narrows toward the top end of the support unit 13. This tapered support portion 13a is contacted peripherally with the inner wall of the tapered portion 5, which has been formed in the upper area of the body 3 of the preform 1 and narrows partly toward the bottom 4.

In this state of contact, a gap G is formed between the top surface 2a of the neck 2 and the top surface 12a of the jig base 12. A part of the slope of the tapered portion 13a of the support unit 13 can be positioned opposite and close to a part of the slope of the tapered portion 5 of the preform 1. That is, a part of the tapered portion in the upper area of the support unit 13 can be fitted to the tapered portion 5 of the preform 1 in direct contact with the inner wall of the preform body 3. Because of this zone of contact, the preform 1 can be held stably in its inverted posture.

The cylindrical bore diameter control device 17 can also be used in the above-described embodiment, just as used in the second embodiment, by fitting the device 17 around the support unit 13. A solid support unit 13 has been used in the embodiment, but for the purpose of weight saving, a hollow support unit 13 can also be used.

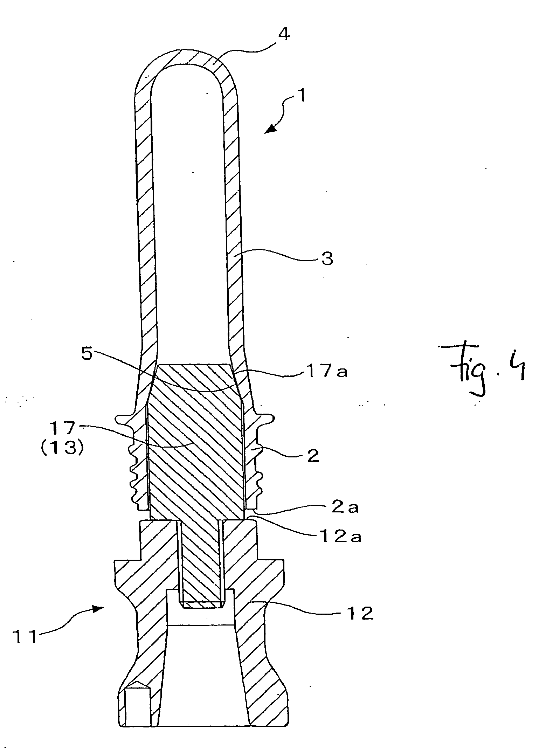

Fig. 4 shows a further embodiment of the jig used in thermal crystallization. Although the jig 11 has also a cylindrical bore diameter control device 17, the upper portion of this device 17 extends in a tapered manner so that the device 17 is given a function as the support unit 13.

The tapered portion 17a of the bore diameter control device 17 is contacted peripherally with the tapered portion 5 of the preform 1, and a gap G is formed between the top surface 2a of the neck 2 and the top surface 12a of the jig base 12. A part of the slope of the tapered portion 17a of the bore diameter control device 17 (support unit 13) can be positioned opposite and close to a part of the slope of the tapered portion 5 of the preform 1. In addition, the portion corresponding to the bore diameter control device 17 is in a position fitted to the neck 2 in direct contact with the inner wall of the neck 2. These double zones of contact ensure that the preform 1 is held stably with no inclination to the inverted posture during the conveying process or during the period when the preform 1 is rotated for uniform heating in the thermal crystallization process.

The preferred embodiments of this invention have been described with respect to a PET resin preform, which is processed by the method of this invention. However, this invention is not limited to the preform of the PET-related resins. The action and effect of this invention are also generally brought about in the resin preform of polypropylene series, polyethylene naphthalate series, and other resins.

As described above, the method of this invention for thermally crystallizing the preform neck ensures that after the processing, the neck has the precise diameter as previously designed even if the preform is treated on the jig of an inverted conveying type. This method also makes it easy to design the thermal crystallization process for the preform, the preform-conveying process, and the biaxial drawing and blow molding process. On the whole, highly productive processes can be attained..

## Claims

1. A method for thermal crystallization treatment of a neck (2) of a synthetic resin preform (1),wherein the thermal crystallization is carried out under the condition that a jig (11) of an inverted support type is loaded with the synthetic resin preform (1) for use in a biaxial drawing and blow molding process, and wherein
said jig (11) comprises an upright support unit (13) which can be inserted into the preform (1) along a central axis,
said support unit (13) having a semispherical end portion (16) disposed at the end of the support unit (13),
wherein said semispherical end portion (16) is composed of a semispherical portion and cylindrical portion which join on the lower end of the semispherical portion and
said semispherical end portion (16) is inserted in the inverted preform (1) until said semi-spherical portion comes in direct contact with a semispherical shell-like bottom (4) of the preform (1) throughout a range of outer surface of the semispherical portion,
while at the same time, said cylindrical portion comes near to or in direct contact with the lower portion of the cylindrical body (3) of the preform (1), and
wherein the inverted preform (1) is installed on the jig (11) so that a gap (G) is formed under a top surface (2a) of the neck (2) of the preform (1).

2. The method for thermal crystallization according to Claim 1, wherein the preform (1) is made of a resin of the polyethylene terephthalate series.

## Patentansprüche

1. Verfahren zur thermischen Kristallisationsbehandlung eines Halses (2) einer Kunstharz-Vorform (1), wobei die thermische Kristallisation unter der Be-dingung ausgeführt wird, dass eine Spannvorrichtung (11) von invertiert tragender Art mit der Kunstharzvorform (1) zur Verwendung in einem biaxialen Zieh-und Blasformvorgang beladen wird, und wobei
die Wandvorrichtung eine aufrechte Trageinheit (13) umfasst, welche in die Vorform (1) entlang einer Zentralachse eingesetzt werden kann,
wobei die Trageinheit (13) einen halbkugelförmigen Endabschnitt (16) aufweist, der an dem Ende der Trageinheit (13) angeordnet ist,
wobei der halbkugelförmige Endabschnitt (16) aus einem halbkugelförmigen Abschnitt und einem zylindrischen Abschnitt zusammengesetzt ist, welche auf dem unteren Ende des halbkugelförmigen Abschnitts miteinander verbunden sind und
der halbkugelförmige Endabschnitt (16) in die invertierte Vorform (1) eingesetzt wird, bis der halbkugelförmige Abschnitt in direktem Kontakt mit einem halbkugelförmigen mantelartigen Boden (4) der Vorform (1) über einen Bereich einer Außenoberfläche des halbkugelförmigen Abschnitts kommt,
während gleichzeitig der zylindrische Abschnitt nahe oder in direktem Kontakt mit dem unteren Abschnitt des zylindrischen Rumpfes (3) der Vorform (1) kommt, und
wobei die invertierte Vorform (1) auf der Spannvorrichtung (11) so angebracht ist, dass ein Spalt (G) unter einer oberen Oberfläche (2a) des Halses (2) der Vorform (1) ausgebildet wird.

2. Verfahren zur thermischen Kristallisation nach Anspruch 1, wobei die Vorform (1) aus einem Harz der Polyethylen-Terephthalat-Reihe hergestellt ist

## Revendications

1. Procédé de traitement de cristallisation thermique d'un col (2) d'une préforme de résine synthétique (1), dans lequel la cristallisation thermique est réalisée dans des conditions dans lesquelles un gabarit (11) d'un type de support inversé est chargé avec la préforme de résine synthétique (1) pour une utilisation dans un processus d'étirage biaxial et de moulage-soufflage, et dans lequel
ledit gabarit (11) comprend une unité de support verticale (13) qui peut être insérée dans la préforme (1) le long d'un axe central,
ladite unité de support (13) ayant une portion d'extrémité semi-sphérique (16) disposée au niveau de l'extrémité de l'unité de support (13),
dans lequel ladite portion d'extrémité semi-sphérique (16) est composée d'une portion semi-sphérique et d'une portion cylindrique qui s'assemblent sur l'extrémité inférieure de la portion semi-sphérique et
ladite portion d'extrémité semi-sphérique (16) est insérée dans la préforme inversée (1) jusqu'à ce que ladite portion semi-sphérique vienne en contact direct avec un fond en forme de coque semi-sphérique (4) de la préforme (1) sur une plage d'une surface externe de la portion semi-sphérique,
et en même temps, ladite portion cylindrique vient à proximité de ou en contact direct avec la portion inférieure du corps cylindrique (3) de la préforme (1), et
dans lequel la préforme inversée (1) est installée sur le gabarit (11) de sorte qu'un espace (G) est formé sous une surface supérieure (2a) du col (2) de la préforme (1).

2. Procédé de cristallisation thermique selon la revendication 1, dans lequel la préforme (1) est constituée d'une résine de la série des poly(téréphtalates d'éthylène)
